# EUROPEAN PATENT SPECIFICATION

(11) **EP 0 641 921 B1**
(45) Date of publication and mention of the grant of the patent: **15.04.1998**
(21) Application number: 94113445.4
(22) Date of filing: 29.08.1994
(51) Int. Cl.: F02B 31/06, F02F 1/42, F01L 3/06

(54) **Tumble valve arrangement for engine**
Taumelventilanordnung für Brennkraftmaschine
Arrangement de soupape à tourbillon transversal pour moteur à combustion interne

(30) Priority: 30.08.1993 JP 235866/93; 06.09.1993 JP 245962/93; 21.04.1994 JP 106040/94
(43) Date of publication of application: 08.03.1995
(73) Proprietor: YAMAHA HATSUDOKI KABUSHIKI KAISHA, Iwata-shi Shizuoka-ken (JP)
(72) Inventor: Isaka, Yoshihiro c/o 2500 Shingai, Shizuoka-ken (JP); Ota, Kiichiro, Iwata-shi Shizuoka-ken (JP); Ito, Masahiro, Shizuoka-ken (JP); Suzuki, Mitsuo, Iwata-shi Shizuoka-ken (JP); Higaki, Yoshiyuki, Shizuoka-ken (JP); Kawai, Takao, Iwata-shi Shizuoka-ken (JP)
(74) Representative: VOSSIUS & PARTNER

(56) References cited:
- EP-A- 0 529 676
- DE-B- 1 292 939
- GB-A- 2 242 226

## Description

This invention relates to a tumble valve arrangement for an engine, and more particularly to an improved tumble valve arrangement for an engine of the type having only a single intake valve for each of its combustion chambers.

The design of the induction system, like many other features in an internal combustion engine, represents a compromise of the optimum design for a given engine running and load condition. That is, where an engine is designed to operate over a wide variety of engine running conditions, certain components, such as the induction system, are designed to compromise the performance under certain conditions to try to improve the performance as much as possible throughout the entire engine speed and load ranges.

For example, an induction system that is efficient at low and mid-range speeds will provide too much restriction to the air flow under high-speed performance, and high-speed performance will deteriorate. That is, under low speed and low loads it is desirable to have the charge enter the combustion chamber at a relatively high velocity and also so as to generate turbulence in the combustion chamber. Under low speed, low load conditions, the turbulence is desirable as it improves flame propagation and will ensure complete combustion. On the other hand, a turbulence-inducing induction system will restrict the flow at high speeds and high loads, and hence can deteriorate high-speed performance.

Conventional induction systems, therefore, represent a compromise between optimum low speed and optimum high speed performance. The actual type of performance which is preferred will depend upon the application for the engine.

There has been proposed, however, induction systems that employ various devices wherein the induction system can have a wider range of performance improvement. For example, the use of control valves in the induction passage to alter its shape and/or effective cross-sectional area may be employed so as to permit performance increases across the entire engine speed and load ranges. GB-A-2 242 226 shows an adjustable baffle that deflects the flow of gas to the valve of a combustion chamber.

One type of turbulence-generating system and control valve which has been employed includes a control valve which directs the flow of the intake charge through the intake port in different directions depending upon the engine running condition. Under high-speed conditions, the control valve provides substantially no restriction to the intake charge, and the intake charge is delivered generally in an axial direction into the combustion chamber.

Under low speed, low load conditions, however, the intake charge is directed to flow primarily into the cylinder through one side of the intake port and generate a tumble action within the combustion chamber. Tumble is a type of swirl, but it occurs about an axis that extends transversely to the axis of the cylinder bore rather than around it. It has been found that tumble has a number of advantages. Specifically, the tumble action tends to become accelerated as the piston approaches top dead center, and thus may provide more efficient turbulence under low speed, low load conditions.

Normally these tumble control valves have been employed in engines having plural intake valves per cylinder. However, the advantages can also be employed in conjunction with engines having only a single intake valve per cylinder.

It is, therefore, a principal object of this invention to provide an improved induction system and tumble arrangement for an engine having only a single intake valve per cylinder.

It is a further object of this invention to provide an improved arrangement for introducing turbulence to an engine having only a single intake valve per cylinder wherein the induction passage and control valve are configured and arranged so as to provide the desired degree of motion in the combustion chamber when the control valve is in its turbulence-generating position.

There is a further advantage to the use of tumble, as opposed to swirl, as a turbulence-generating media. In some instances it is desirable to attempt to stratify the charge in the combustion chamber. By employing a stratified charge, the entire charge within the combustion chamber need not be stoichiometric in order for combustion to be initiated. However, where such a lean total charge is employed in the combustion chamber, it is necessary to ensure that a stoichiometric charge is present at the gap of the spark plug at the time it is fired.

With swirl, it may be difficult to ensure that the stoichiometric charge is kept present at the spark gap at the time of spark firing unless precombustion or torch chambers are employed. With tumble, on the other hand, it is possible to provide a rich fuel-air mixture on one side of a plane containing the cylinder bore axis and on which the spark plug lies while the mixture on the other side of the plane may be substantially leaner. Since the tumble motion occurs about an axis transverse to the cylinder bore axis, the tumble action will not cause the same degree of mixing in the combustion chamber as occurs with swirl.

It is, therefore, a still further object of this invention to provide an improved tumble arrangement for an internal combustion engine wherein the stratified charge may be obtained and maintained.

It is a further object of this invention to provide an improved induction system arrangement for an internal combustion engine using only a single intake valve wherein a stratified charge may be obtained and maintained throughout the stroke cf the piston and around the spark gap at the time of firing.

The various features of this invention are adapted to be embodied in a cylinder head for use with a cylinder block having a cylinder bore and which is closed by the cylinder head. The cylinder head has a surface cooperable with the cylinder bore and a piston reciprocating therein to form a combustion chamber. A single valve seat is formed in the cylinder head surface at the termination of an intake passage for delivering an intake charge to the combustion chamber through the single valve seat. A control valve is positioned in the intake passage and is movable between an open position wherein the charge flows into the combustion chamber without substantial restriction and a closed position wherein the flow from the intake passage into the combustion chamber from the valve seat is in a tumble motion rotating about an axis that extends transversely to the axis of the cylinder bore.

In accordance with one feature of the invention, the intake passage is inclined at an angle to a plane containing the axis of the cylinder bore so that the flow through the valve seat is disposed at an angle to the plane.

In accordance with another feature of the invention, the intake passage is offset relative to the valve seat so that a greater flow area of the intake passage lies on one side of the valve seat then on the other side of the valve seat so as to promote more flow through the one side of the valve seat than the other.

Figure 1 is a partial cross-sectional view taken through a single cylinder of a multiple-cylinder internal combustion engine constructed in accordance with an embodiment of the invention.

Figure 2 is a cross-sectional view taken along the line 2-2 of Figure 1.

Figure 3 is a partial phantom view looking in the direction of the intake passage and with the control valve in its fully opened position.

Figure 4 is a view, in part similar to Figure 3, and shows the fuel injector and spray pattern, also in phantom.

Figure 5 is a top plan view, in part similar to Figure 2, and shows the flow when the control valve is in its opened position.

Figure 6 is a view, in part similar to Figure 5, and shows the flow when the control valve is in its closed position.

Figure 7 is a view, in part similar to Figure 3, and shows the control valve in its open position.

Figure 8 is a cross-sectional view taken along the line 8-8 of Figure 7.

Figure 9 is a view, in part similar to Figure 7, but shows the control valve in its closed position.

Figure 10 is a cross-sectional view, taken along the line 10-10 and in part similar to Figure 8, but shows the control valve in its closed position.

Figure 11 is a cross-sectional view, in part similar to Figure 2, and shows another embodiment of the invention.

Figure 12 is a cross-sectional view, in part similar to Figures 2 and 11, and shows another arrangement which does not conform to the invention.

Figure 13 is a cross-sectional view, in part similar to Figure 1, and shows yet a further embodiment of the invention.

Figure 14 is a cross-sectional view taken along the line 14-14 of Figure 13 and is in part similar to Figures 2, 11, and 12.

Figure 15 is a cross-sectional view taken along the line 15-15 of Figure 14 and shows the direction of charge flow into the combustion chamber when operating in the tumble-generating condition.

Figure 16 is a bottom plan view of the cylinder head of this embodiment and shows how the squish area acts to further assist in the tumble action.

Figure 17 is a view, in part similar to Figure 7, and shows another configuration of control valve arrangement which may be utilized, with the control valve being depicted in its closed tumble-inducing position.

Figure 18 is a cross-sectional view taken along the line 18-18 of Figure 17.

Figure 19 is a view, in part similar to Figure 17, and shows a further embodiment of the invention.

Figure 20 is a view, in part similar to Figures 17 and 19, and shows a still further embodiment of the invention.

Figure 21 is a view, in part similar to Figures 17, 19, and 20, and shows a yet further embodiment of the invention.

Figure 22 is a cross-sectional view taken along the line 22-22 of Figure 21.

Figure 23 is a cross-sectional view, in part similar to Figure 22, and shows yet another embodiment of the invention.

Figure 24 is a cross-sectional view taken along the line 24-24 of Figure 23.

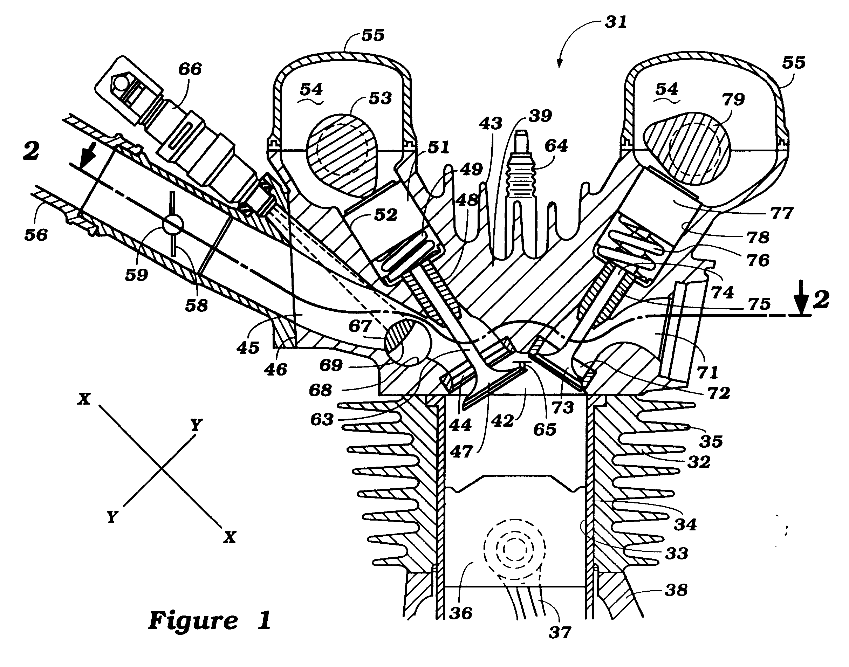

Referring now in detail to the first embodiment of Figures 1-10, an internal combustion engine constructed in accordance with this embodiment is shown partially and is identified generally by the reference numeral 31. Basically, the engine 31 will be depicted by description to a single cylinder of the engine. It will be readily apparent to those skilled in the art how the invention can be applied to multiple cylinder engines and engines having any type of cylinder configuration, such as in-line, V-type, opposed, etc.

In the illustrated embodiment, the engine 31 is depicted as being employed for application in a motorcycle or similar vehicle, and the engine 31 is mounted in the vehicle so that it will be inclined to be horizontal and vertical, as indicated by the planes XX and YY, respectively, in Figure 1. The engine 31 has been tilted into an upright position in certain of the drawings so as to more clearly show the construction and so that the reader can easily orient himself with respect to the engine. Although the invention is described in conjunction with such an application, it will be readily apparent to those skilled in the art that the invention can be employed with engines utilized for other purposes. However, the invention has particular utility in conjunction with engines that are employed to power motor vehicles because of the fact that the induction system, to be described, provides good performance over a wide range of engine loads and speeds.

The engine 31 includes a cylinder block 32 in which one or more cylinder bores 33 are formed by pressed or cast-in liners 34. In the illustrated embodiment, the engine 31 is air cooled, and for this purpose the cylinder block 32 is provided with cooling fins 35. As should be readily apparent to those skilled in the art, however, the invention may also be employed in conjunction with water-cooled engines or engines that are partially air cooled and partially water cooled.

Pistons 36 reciprocate in each of the cylinder bores 33 and are connected by means of connecting rods 37 to a crankshaft (not shown). The crankshaft is rotatably journaled within a crankcase chamber formed by a crankcase member 38 that is affixed to the cylinder block 32 in a known manner. Since the invention deals primarily with the cylinder head and induction system arrangement for the engine 31, the crankcase, crankshaft, and output elements are not shown. Where any components of the engine 31 are not depicted or described, they may be considered to be conventional.

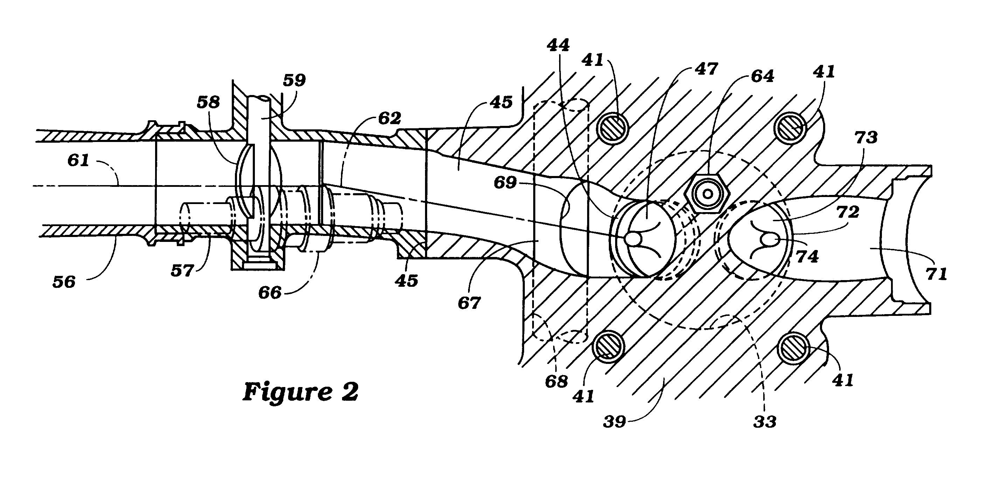

A cylinder head, indicated generally by the reference numeral 39, is affixed to the cylinder block 32 in a well-known manner as by means of a plurality of head bolts 41 (Figure 2) that are disposed at equally spaced distances around the cylinder bore 33. The lower surface of the cylinder head 39 is provided with individual recesses 42, which are in closing relationship with the cylinder bores 33 and define with the cylinder bores 33 and the heads of the pistons 36 the combustion chambers. The volume of these combustion chambers vary cyclically as the piston 36 reciprocates in the cylinder bore 33, as is well known in this art. At times the recesses 42 will themselves be referred to as the combustion chambers, since at top dead center position, the recesses 42 describe primarily the volume of the combustion chamber.

The cylinder head 39, like the cylinder block 32, is formed with cooling fins 43. As has already been noted, however, the engine 31 may be all or partially water cooled.

Formed in the cylinder head recess 42 at one side thereof is an intake valve seat 44 which is formed at the end of an intake passage 45 that extends from one side surface 46 of the cylinder head 39 and which terminates at the valve seat 44. The valve seat 44 may be formed by a pressed or cast-in insert.

A poppet-type intake valve, indicated generally by the reference numeral 47, has a stem portion that is slidably supported for reciprocation about an axis defined by a valve guide 48 that is pressed or cast into the cylinder head 39 in a known manner. A coil compression spring 49 engages the cylinder head 39 and a keeper retainer assembly that is affixed to the valve stem of the intake valve 47 for urging it to its closed position. A thimble tappet 51 is slidably supported within a bore 52 of the cylinder head 39 and is associated with this keeper retainer assembly through an adjustable shim (not shown) . An intake camshaft 53 is journaled within the cylinder head assembly 39 in a well-known manner for operating the thimble tappet 51 and the intake valve 47. This mechanism is contained within a cam chamber 54 that is closed by a cam cover 55 in a known manner.

The induction passage 45 of the cylinder head and the induction system which serves it, now to be described, are configured in such a way so as to provide a desired flow of intake charge into the combustion chamber 42. The induction system includes a remotely positioned air inlet device (not shown) that has an individual runner 56 that extends to and communicates with a throttle body 57 which is interposed between the induction system runner 56 and the surface 46 of the cylinder head 39. A manually operated throttle valve 58 is positioned in the throttle body 57 and is fixed on a throttle shaft 59 for controlling the flow through the induction system in response to the input from the vehicle operator. It should be noted that the runner 56 and throttle body 57 define an intake passage which is generally cylindrical in shape and which in this embodiment has a central axis 61 that extends generally perpendicularly to a plane containing the axis of the cylinder bore 33 and either parallel to or containing the axis of the crankshaft of the engine. This axis is also parallel to the axis of the intake camshaft 53.

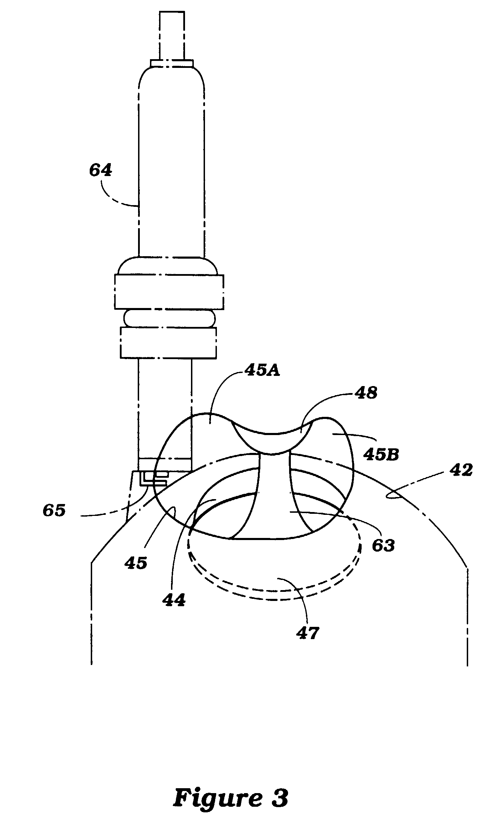

The downstream side of the throttle body, however, and the inlet portion of the cylinder head intake passage 45 are inclined at an acute angle to this plane, as indicated at 62 in Figure 2, so as to turn the direction of the charge flowing into the combustion chamber 42 in a direction toward one side of the intake valve 47. However, the intake passage 45 in the cylinder head 39 is configured, as shown in Figure 3, so that the intake passage 45 is divided into a first portion 45a on one side of the stem of the intake valve 47 and a smaller cross-sectional area portion 45b disposed on the other side of the valve stem, which is identified at 63 in Figure 3. Hence, the intake passage 45 is offset to one side of the intake valve seat 44, as clearly shown in this figure.

In accordance with an embodiment of the invention, a spark plug 64 is mounted in the cylinder head 39 with its spark gap 65 lying on this larger side of the intake passage 45. As a result, although the flow direction is somewhat headed in the opposite direction, there will be a larger air flow into the combustion chamber on the side of the intake valve seat 44 closer to the spark plug gap 65 than on the opposite side.

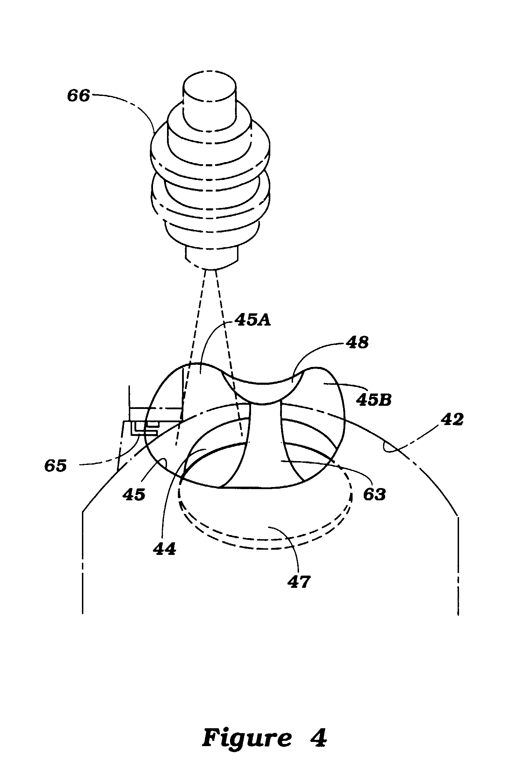

A fuel injector 66 is mounted in the throttle body 57 on one side of the axis 61, but is disposed so that its spray axis will intersect the centerline 62 of the cylinder head intake passage 45 and be directed toward the larger side 45a of the induction passage 45, as clearly shown in Figure 4. As a result, when the fuel injector 66 injects and during the intake cycle when the intake valve 47 is opened, a richer fuel-air mixture will be disposed on the side adjacent the spark plug 66 than on the opposite side so as to achieve some stratification.

Generally, the induction system, including the cylinder head intake passage 45 as thus far described, is designed primarily so that the charge which enters the combustion chamber 42 will flow in a generally unrestricted fashion. Such an arrangement is particularly useful in order to obtain high specific outputs and good volumetric efficiency. However, under low engine speeds and low loads, such large and low restriction induction passages tend to have a sluggish air flow into the cylinder, and poor fuel vaporization and combustion process can occur.

Therefore, in accordance with an important feature of the invention, a control valve assembly, indicated generally by the reference numeral 67, is provided in the cylinder head 39 and is rotatably journaled within a bore 68 formed in the cylinder head, which extends transversely to the aforenoted plane containing the axis of the cylinder bore. It should be noted that the bore 68 is disposed between the axis of the cylinder bore 33 and the axis of rotation of the intake camshaft 53, and is disposed outwardly of the head bolt 41 on the intake side of the engine.

Basically, the control valve 67 is formed at a circular section which is provided with a cutout 69, which, in the fully opened position, has a surface that is substantially coincident with the cylinder head surface that forms the induction passage 45 so as to provide no significant flow restriction in the fully opened position, which position is shown in Figures 3, 4, 5, 7, and 8.

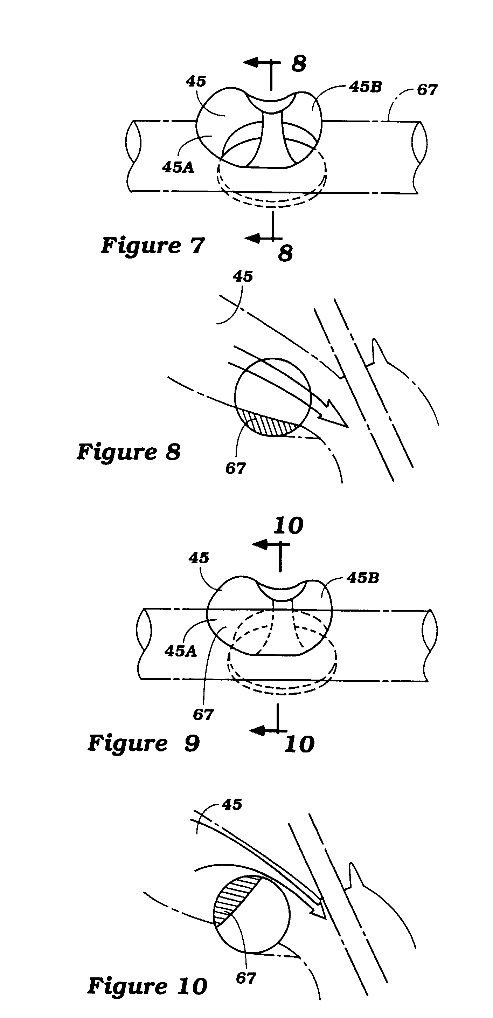

However, when rotated in a clockwise direction, as seen in Figures 1, 2, 6, 9, and 10, the body of the valve 67 will protrude into the induction passage 45 and redirect the air flow therethrough toward the upper portion thereof so as to flow through the portion of the intake valve seat 44 disposed closest to the cylinder bore axis and in a direction as indicated by the arrow in Figure 10 so as to generate a swirling or tumbling action within the cylinder bore about an axis that extends transverse to the axis of the cylinder bore 33. This tumble action will continue to be maintained as the piston 36 approaches top dead center and will, in fact, accelerate as the volume of the combustion chamber 42 is decreased so as to further increase the tumble and swirl under this condition. Hence, the charge will be quite turbulent, and there will be rapid flame propagation. Also, since the charge is stratified more toward the side of the spark plug 64 and specifically at the spark gap 65, when the spark plug 64 is fired, this charge will be stoichiometric and will burn rapidly and completely.

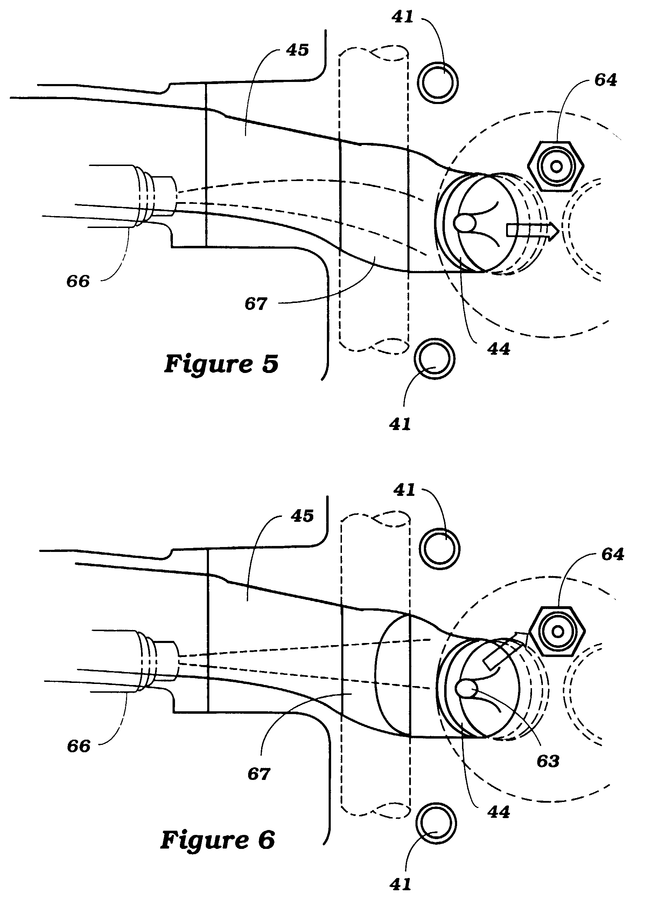

As may be seen in Figure 5, when the control valve 67 is in its fully opened position, the air flow through the induction passage 45 will tend to sweep the fuel spray from the fuel injector 66 more toward the center of the intake valve seat 44 so as to provide more homogeneous mixture in the combustion chamber. However, when the control valve 67 is in its closed position, as shown in Figure 6, the flow volume will be reduced and the injector penetration will be greater, since there will be a somewhat lower volume of air flow, albeit at a somewhat higher speed than if the control valve 67 were not closed. Thus the fuel spray will be directed toward one side of the stem 63 of the intake valve, and specifically the spark plug side thereof, so as to provide the aforenoted stratification.

Referring again primarily to Figures 1 and 2, an exhaust passage 71 is formed on the side of the cylinder head 39 opposite the intake passage 45 and extends from the combustion chamber recess 42 through an exhaust valve seat 72 which communicates at its discharge end with an exhaust manifold (not shown) and exhaust system for the discharge of exhaust gases to the atmosphere. A poppet-type exhaust valve 73 has a stem portion 74 that is slidably supported in an exhaust valve guide 75 that is attixed in a suitable manner to the cylinder head 39, as by being pressed or cast in. The exhaust valve 73 is urged to its closed position by means of a coil compression spring 76 that is engaged by a keeper retainer assembly (not shown) affixed to the upper end of the valve stem 74 and which bears against the cylinder head at its lower end. A tappet 77 is slidably supported in a bore 78 formed in the cylinder head 39. An exhaust camshaft 79 is also journaled in the cam chamber 54 and is driven by means of a drive along with the intake camshaft 53 at one-half crankshaft speed, as is well known in this art. The exhaust camshaft 79 serves to open the exhaust valve 73 and permit the exhaust gases to discharge from the combustion chamber in a well-known manner.

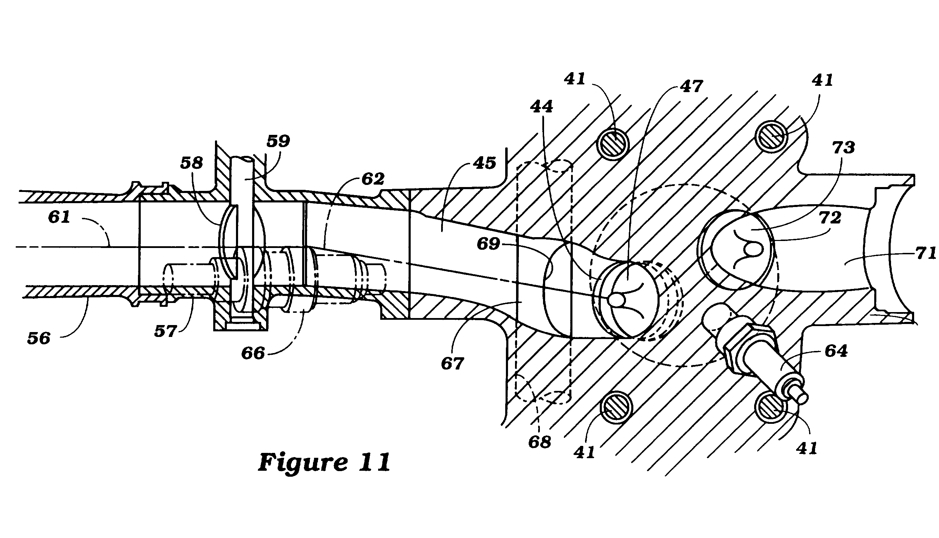

In the embodiment of the invention as thus far described, the offset or angled centerline 62 of the throttle body 57 and cylinder head intake passage 45 has been directed away from the spark plug 64, and specifically at spark gap 65, even though the larger portion of the intake passage 45 is disposed on the side adjacent the spark plug 64 and the spark gap 65. In addition, the centerline of the intake valve stem 47 and cf the exhaust valve stem 74 have been placed on a plane that is perpendicular to this plane and which also contains the cylinder bore axis. Of course, other relationships are possible, and Figure 11 shows such an arrangement which is generally the same as that previously described, except as will be noted. Since all components of this embodiment are the same except for their orientations, the same reference numerals have been used to designate components which are the same but which may be placed differently.

In this embodiment, the spark plug 64 is disposed on the side of the aforenoted plane opposite that shown in Figure 2, and the intake valve seat 44 is also shifted toward this side, as clearly shown in Figure 11. Hence, the flow direction of the flow axis 62 of the cylinder head intake passage 45 will be directed at the gap of the spark plug 64, and the larger surface area of the intake passage 45 will be disposed toward the axis of the cylinder bore but still on the same side of the cylinder bore axis as the spark plug 64. Other than that, this embodiment operates and is constructed the same as that previously described.

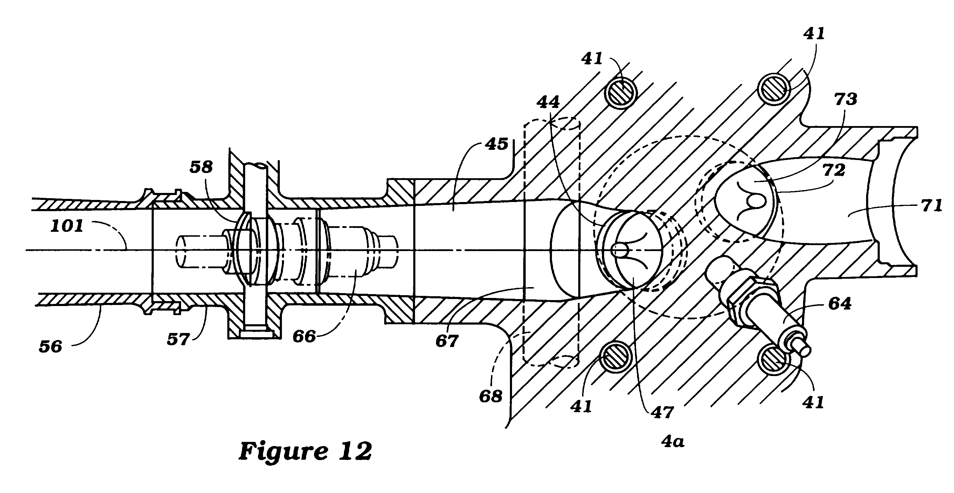

Figure 12 shows an arrangement which is in part similar to that of Figures 1-10 and 11, and differs from those embodiments previously described in only the orientation of the components and not in their basic construction. In this arrangement, the intake valve seat 44 is located offset, as in the embodiment of Figure 11, and the spark plug 64 is also placed on this offset side of the cylinder bore axis. However, in this arrangement the intake passage centerline, indicated generally by the reference numeral 101, is completely in line from the induction device 56 through the throttle body 57 and cylinder head intake passage 45, and passes through the center of the intake valve seat 44. As a result, the fuel injector 66 is also disposed so as to be on this same centerline. Hence, this arrangement does not achieve quite as much stratification as with the previously described embodiment, but will nevertheless achieve some stratification because the intake valve seat 44 and spark plug 64 are offset to the same side of the cylinder bore axis.

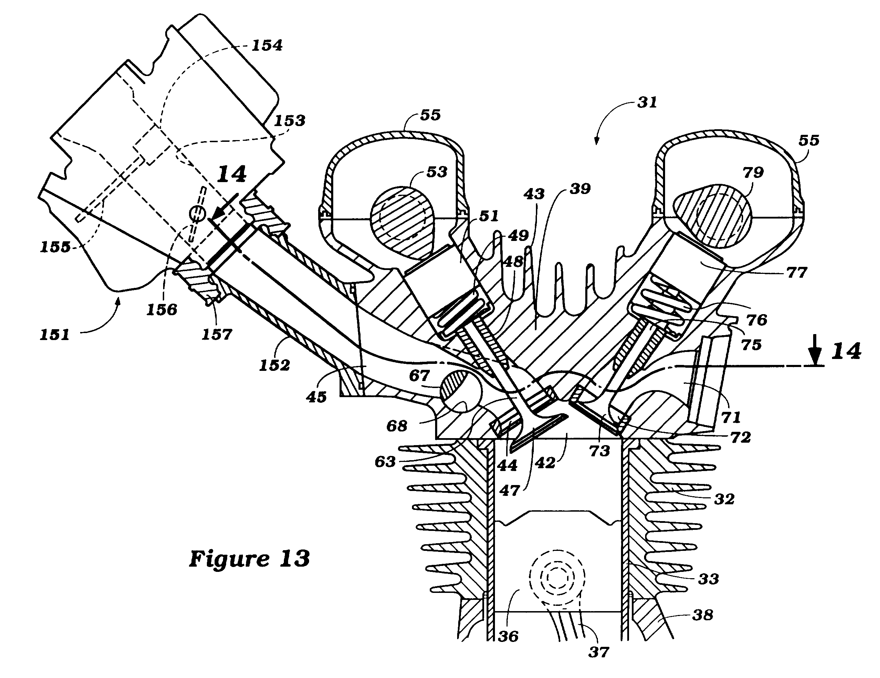

In the embodiments thus far described, fuel injection has been employed and this has been manifold injection. The invention may also be employed with direct cylinder fuel injection or with carburetion although that later form of application does not lend itself quite as much to stratification as with fuel injection either direct or manifold. Figures 13-16 show an embodiment of the invention which is generally similar to those which have been previously described and, for that reason, components of this embodiment which are the same as the previously-described embodiment have been identified by the same reference numerals. In this embodiment, certain of the geometric relationships are different, and it is to be understood that those different relationships may also be employed, as will be described, in conjunction with fuel injected engines. In addition, this embodiment shows an arrangement wherein a squish area may also be employed so as to further achieve the stratification and augment the turbulent flow. This squish action can be also used with the embodiments as thus far described and also with those which will be described later.

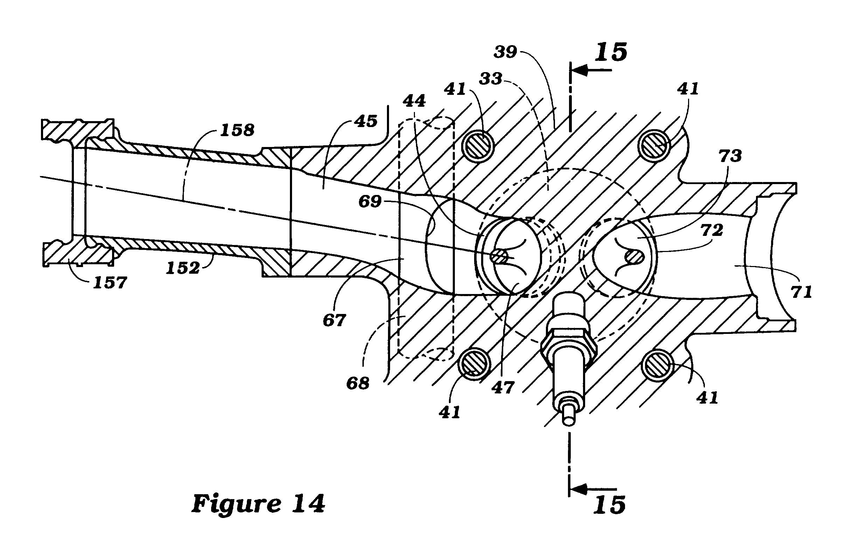

In this embodiment, the basic structure of the cylinder head is as previously described, however, this embodiment shows an arrangement like the embodiment in construction of Figures 1-10 but the spark plug is disposed on the side of the cylinder head opposite that shown in Figures 1-10 as clearly shown in Figure 14. However, the arrangement is still such that there will be stratification achieved particularly when the tumble action occurs that will direct the rich fuel/air mixture to the gap 65 of the spark plug 64.

With this embodiment, however, a charge former in the form of an air valve carburetor, indicated generally by the reference numeral 151 serves the cylinder head intake passage 45 through an intake manifold 152. The carburetor 151 has an induction passage 153 that receives atmospheric air from an air inlet which can include an air silencer and air filter (not shown). A sliding piston valve 154 cooperates with the induction passage 153 so as to provide a constant pressure drop thereacross and carries a metering rod 155 that cooperates with a main metering jet (not shown) for controlling the fuel flow in response to the position of the sliding piston 154 and the effective cross-sectional area of the induction passage 153.

A manually operated throttle valve 156 is positioned in the induction passage 153 downstream of the sliding piston 154.

The carburetor 151 is connected to the manifold 152 by an insulating spacer 157.

As may be seen in Figure 14, the manifold 152 and cylinder head intake passage 45 have an offset centerline, indicated generally by the reference numeral 158 which is offset in the same direction as that shown in Figures 1-10. As has been noted, however, the spark plug 64 in this embodiment is offset to the side of the perpendicular plane containing the cylinder bore axis toward which the centerline 158 is directed. Hence, some form of fuel stratification will be achieved although, as noted, not quite as effective as that of the fuel injected embodiment.

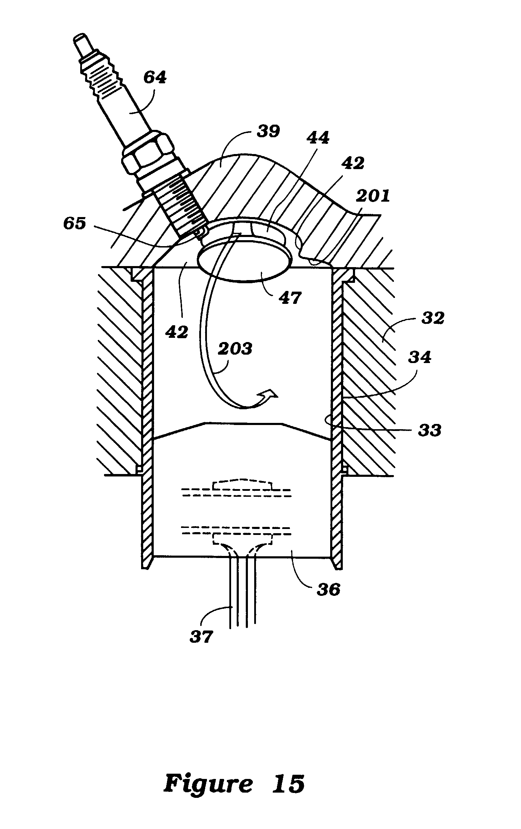

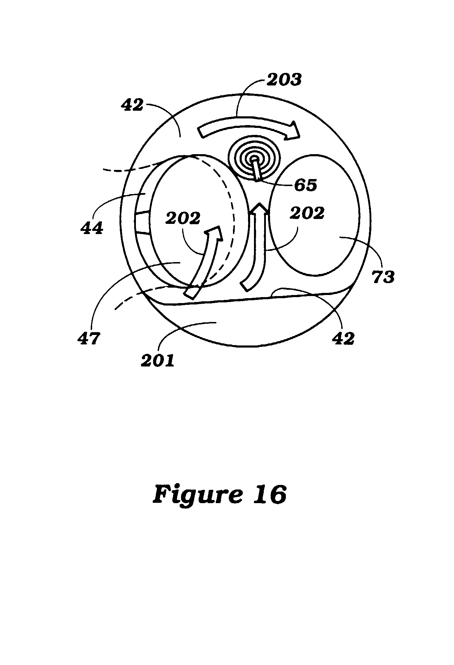

However, the structure for improving stratification best shown in Figures 15 and 16 does provide good stratification even with a carburetor engine. In accordance with this arrangement, the cylinder head recess 42 has a flattened squish area 201 formed at one side thereof and this is the side away from which the intake charge is directed. As a result, when the piston moves to its top dead center position, a squish action will be achieved as shown by the arrows in Figure 16 which arrows are indicated by the reference numerals 202 which cooperate with the offset tumble action caused by the flow in the direction of the arrow 203 so as to further direct the intake charge toward the spark gap 65 so as to improve the stratification effect.

In the embodiments of the invention as thus far described, the cutout 69 of the control valve 67 has been generally symmetrically disposed relative to the portion of the intake passage 45 across which it extends. It may be possible, however, to configure this cutout so as to achieve different types of flow patterns, particularly when operating in the tumble inducing position. Next will be described a number of embodiments showing varying configurations for the control valve. Because this is the only difference from the previously-described embodiments and since these constructions may be utilized in conjunction with any of the valve placements, charge forming systems and intake passages as previously described, only the control valve and its relationship with the intake passage and intake valve have been depicted in these figures. Where components are the same as those previously described, they have been identified by the same reference numerals.

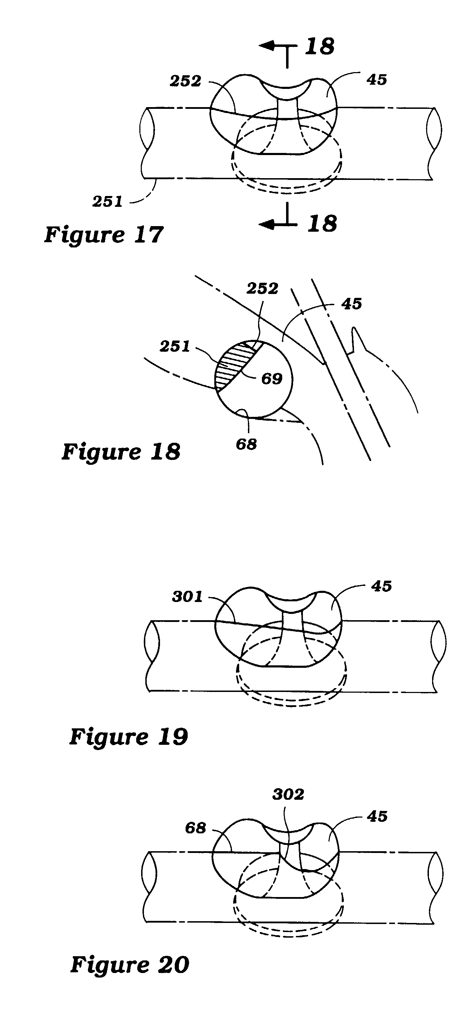

The first of these embodiments is shown in Figures 17 and 18 and the control valve is identified generally by the reference numeral 251 and has for the most part a cylindrical configuration that is received in the bore 68 of the cylinder head. In this embodiment, however, there is provided not only the cutout 69 as with the previously described embodiments but also a further notch 252 which may be asymmetrically disposed so as to provide a somewhat greater flow area than with the previously described embodiment and also to configure the flow area toward one side or the other of the intake passage 45. For example, this cutout may be configured as shown at 301 in Figure 19 so as to direct more flow toward the right side than the left side.

An even more restricted cutout is shown at 302 in Figure 20 wherein substantially more flow is permitted on the right-hand side and there is very little transition between the right and left-hand side.

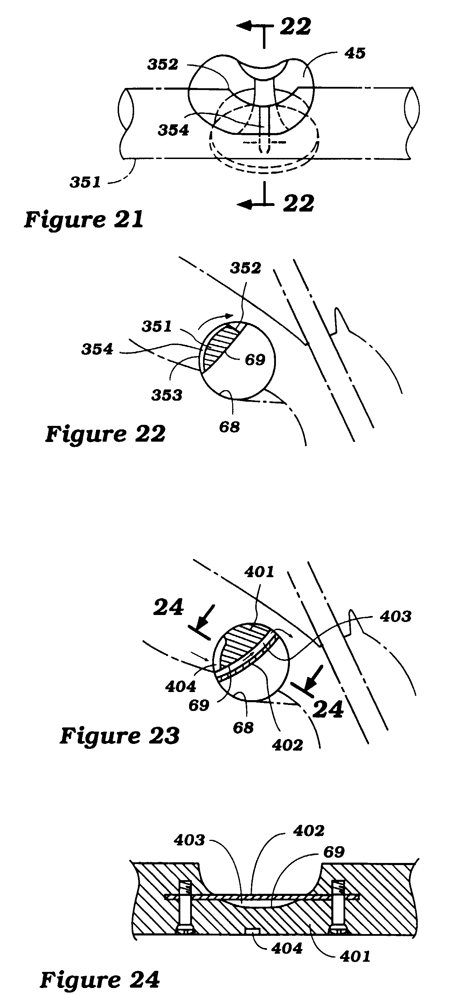

In addition to changing the configuration of the cutout in the control valve, the control valve may also be provided with an arrangement that augments the flow and Figures 21 and 22 show such an embodiment wherein the control valve is identified generally by the reference numeral 351. The control valve 351 is provided with a configured cutout 352 in addition to the cutout 69 and which is disposed in this embodiment generally in line with the stem of the intake valve. However, the peripheral surface, indicated generally by the reference numeral 353 of the control valve is provided with a slotted passageway 354 which when the control valve is in its tumble inducing position as shown in Figures 21 and 22 cooperates with a recessed area formed by the bore 68 so that air may be drawn by a venturi-like action in the direction of the arrow shown in Figure 22 so as to further augment the flow through the recess 352 and increase its velocity.

Figures 23 and 24 show another embodiment of control valve, indicated generally by the reference numeral 401 embodying a further tumble augmentation method. The valve 401, like those of the previously described embodiments has a cutout portion 69. However, in this embodiment, the cutout portion 69 has a baffle plate 402 affixed across it which will form a flow channel 403. When the valve 401 is in its tumble inducing position, a ram air charge may be delivered to the flow channel 403 through a slot 404 formed in the face of the valve element 401 which is uncovered when the valve 401 is turned to its tumble inducing position. When this occurs, a flow can be induced as shown by the arrow so as to augment the tumble action. This slot and arrangement can be appropriately located transversely on the control valve 401 so as to be concentrated on one or the other side of the intake passage 45.

It should be readily apparent from the foregoing description that the described embodiments of the invention can provide very effective induction system control for engines having only a single intake valve per cylinder. In addition, the tumble action which is generated by the control valve can be configured and augmented so as to improve stratification as well as inducing turbulence through tumble action. Of course, the foregoing description is that of preferred embodiments of the invention.

## Claims

1. A cylinder head for use with a cylinder block (32) having a cylinder bore (33) closed by said cylinder head (39), said cylinder head (39) having a surface cooperative with said cylinder bore (33), a piston (36) reciprocating in said cylinder bore to form a combustion chamber (42), said piston (36) being connected to a crankshaft, only a single valve seat (44) formed in said cylinder head surface at the termination of an intake passage (45) for delivering an intake charge to said combustion chamber (42), and a control valve (67) positioned in said intake passage (45) and movable between an open position wherein the charge flows into said combustion chamber without substantial restriction and a closed position wherein the flow from said intake passage (45) flows into said combustion chamber (42) through said valve seat (44) in a tumble motion rotating about an axis that extends transversely to the axis of said cylinder bore (33), the intake passage (45) being inclined at an angle to a first plane containing the axis of said cylinder bore (33), said plane, in use, being in line with the axis of the crankshaft so that the flow through said valve seat (44) is at an angle to said first plane, characterized in that said intake passage (45) is also inclined at an angle to a second plane perpendicular to the first plane and also containing the cylinder bore axis, and/or in that the intake passage (45) is offset relative to the center of the valve seat (44) so that a greater flow area serves one side of the valve seat (44) than the other.

2. The cylinder head as set forth in Claim 1, wherein the intake passage (45) is offset relative to the center of the valve seat (44) so that a greater flow area serves one side (45a) of the valve seat (44) than the other (45b) and further including a poppet type intake valve (47) supported for reciprocation by the cylinder head (39) and cooperating with the valve seat (44) for controlling the flow therethrough.

3. The cylinder head as set forth in Claim 2, wherein the control valve (67) directs the flow through a side of the valve seat disposed adjacent the first plane and away from the side of the valve seat spaced from the plane.

4. The cylinder head as set forth in any of the preceding claims, wherein the valve seat (44) has its center disposed substantially on the perpendicular second plane.

5. The cylinder head as set forth in any of the preceding claims, further including a fuel injector (66) for spraying fuel into the intake passage (45).

6. The cylinder head as set forth in Claim 5, wherein the fuel injector (66) is offset to one side of the induction passage.

7. The cylinder head as set forth in Claim 6, wherein the fuel injector (66) is offset toward the side closest to the cylinder bore axis.

8. The cylinder head as set forth in any of the preceding claims, wherein the center of the valve seat (44) is offset relative to the second plane perpendicular to the first plane and also containing the cylinder bore axis.

9. The cylinder head as set forth in any of the preceding claims, further including a spark plug (64) mounted in the cylinder head (39) and having its gap (65) disposed in the combustion chamber.

10. The cylinder head as set forth in claim 9, wherein the flow axis (62) of the intake passage (45) is directed toward the spark gap (65).

11. The cylinder head as set forth in Claim 9, wherein the flow axis (62) of the intake passage (45) is directed away from the spark gap (65).

12. The cylinder head as set forth in Claim 9, wherein the spark plug (64) lies on the side of the second plane perpendicular to the first plane, where the greater flow area of the intake passage (45) relative to the valve seat is disposed.

13. The cylinder head as set forth in Claim 9, wherein the spark plug (64) is disposed on the side of the second plane perpendicular to the first plane, toward which the centerline of the intake passage (45) is directed.

14. The cylinder head as set forth in any of the preceding claims, wherein the combustion chamber is formed with a squish area (201) disposed on one side of said second plane.

## Patentansprüche

1. Zylinderkopf zur Verwendung mit einem Zylinderblock (32), welcher aufweist: eine Zylinderbohrung (33), die durch den Zylinderkopf (39) verschlossen wird, wobei der Zylinderkopf (39) eine mit der Zylinderbohrung (33) zusammenwirkende Oberfläche aufweist, einen in der Zylinderbohrung hin- und hergehenden Kolben (36) zur Bildung eines Brennraums (42), wobei der Kolben (36) mit einer Kurbelwelle verbunden ist, nur einen Ventilsitz (44), der in der Zylinderkopfoberfläche am Ende eines Ansaugkanals (45) zur Abgabe einer Ansaugladung in den Brennraum (42) ausgebildet ist, und ein in dem Ansaugkanal (45) angeordnetes Steuerventil (67), das zwischen einer geöffneten Stellung, in der die Ladung ohne wesentliche Einschnürung in den Brennraum fließt, und einer geschlossenen Stellung beweglich ist, in der die Strömung aus dem Ansaugkanal (45) durch den Ventilsitz (44) in den Brennraum (42) in einer Taumelbewegung einströmt, die um eine Achse rotiert, die sich quer zur Achse der Zylinderbohrung (33) erstreckt, wobei der Ansaugkanal (45) unter einem Winkel gegen eine erste Ebene geneigt ist, welche die Achse der Zylinderbohrung (33) enthält, wobei die Ebene im Gebrauch in Linie mit der Kurbelwellenachse liegt, so daß die Strömung durch den Ventilsitz (44) unter einem Winkel gegen die erste Ebene geneigt ist, dadurch gekennzeichnet, daß der Ansaugkanal (45) gleichfalls unter einem Winkel gegen eine zweite Ebene geneigt ist, die zur ersten Ebene senkrecht ist und gleichfalls die Zylinderbohrungsachse enthält, und/oder daß der Ansaugkanal (45) gegen den Mittelpunkt des Ventilsitzes (44) versetzt ist, so daß eine Seite des Ventilsitzes (44) durch einen größeren Durchflußquerschnitt versorgt wird als die andere.

2. Zylinderkopf nach Anspruch 1, wobei der Ansaugkanal (45) gegen den Mittelpunkt des Ventilsitzes (44) versetzt ist, so daß eine Seite (45a) des Ventilsitzes (44) durch einen größeren Durchflußquerschnitt versorgt wird als die andere (45b), und der ferner ein Teller- bzw. Kegelansaugventil (47) aufweist, das für eine hin- und hergehende Bewegung im Zylinderkopf (39) gelagert ist und mit dem Ventilsitz (44) zusammenwirkt, um die durchfließende Strömung zu steuern.

3. Zylinderkopf nach Anspruch 2, wobei das Steuerventil (67) die Strömung durch eine Seite des Ventilsitzes lenkt, die angrenzend an die erste Ebene und entfernt von der Seite des Ventilsitzes, die von der Ebene beabstandet ist, angeordnet ist.

4. Zylinderkopf nach einem der vorstehenden Ansprüche, wobei der Mittelpunkt des Ventilsitzes (44) im wesentlichen auf der senkrechten zweiten Ebene liegt.

5. Zylinderkopf nach einem der vorstehenden Ansprüche, der ferner ein Einspritzventil (66) zum Einspritzen von Kraftstoff in den Ansaugkanal (45) aufweist.

6. Zylinderkopf nach Anspruch 5, wobei das Einspritzventil (66) nach einer Seite des Ansaugkanals hin versetzt ist.

7. Zylinderkopf nach Anspruch 6, wobei das Einspritzventil (66) nach der Seite hin versetzt ist, die der Zylinderbohrungsachse am nächsten liegt.

8. Zylinderkopf nach einem der vorstehenden Ansprüche, wobei der Mittelpunkt des Ventilsitzes (44) gegen die zur ersten Ebene senkrechte zweite Ebene, die gleichfalls die Zylinderbohrungsachse enthält, versetzt ist.

9. Zylinderkopf nach einem der vorstehenden Ansprüche, der ferner eine Zündkerze (64) aufweist, die im Zylinderkopf (39) montiert ist und deren Funkenstrecke (65) im Brennraum angeordnet ist.

10. Zylinderkopf nach Anspruch 9, wobei die Strömungsachse (62) des Ansaugkanals (45) auf die Funkenstrecke (65) gerichtet ist.

11. Zylinderkopf nach Anspruch 9, wobei die Strömungsachse (62) des Ansaugkanals (45) von der Funkenstrecke (65) weg gerichtet ist.

12. Zylinderkopf nach Anspruch 9, wobei die Zündkerze (64) auf der Seite der zur ersten Ebene senkrechten zweiten Ebene angeordnet ist, wo der größere Durchflußquerschnitt des Ansaugkanals (45) bezüglich des Ventilsitzes liegt.

13. Zylinderkopf nach Anspruch 9, wobei die Zündkerze (64) auf der Seite der zur ersten Ebene senkrechten zweiten Ebene angeordnet ist, auf welche die Mittellinie des Ansaugkanals (45) gerichtet ist.

14. Zylinderkopf nach einem der vorstehenden Ansprüche, wobei der Brennraum mit einer Quetschzone (201) ausgebildet ist, die auf einer Seite der zweiten Ebene liegt.

## Revendications

1. Culasse de cylindre destinée à être utilisée avec un bloc cylindre (32) possédant un alésage de cylindre (33) fermé par ladite culasse de cylindre (39), ladite culasse de cylindre (39) ayant une surface qui coopère avec ledit alésage de cylindre (33), un piston (36) qui coulisse alternativement dans ledit alésage de cylindre pour former une chambre de combustion (42), ledit piston (36) étant relié à un vilebrequin, seulement un unique siège de soupape (44) formé dans ladite surface de la culasse de cylindre à l'extrémité d'un passage d'admission (45) pour introduire une charge d'admission dans ladite chambre de combustion (42), et une vanne de commande (67) positionnée dans ledit passage d'admission (45) et mobile entre une position ouverte, dans laquelle la charge pénètre dans ladite chambre de combustion sans étranglement notable, et une position fermée dans laquelle le flux arrivant dudit passage d'admission (45) pénètre dans ladite chambre de combustion (42) en traversant ledit siège de soupape (44) en un mouvement turbulent qui tourne autour d'un axe qui s'étend transversalement à l'axe dudit alésage de cylindre (33), le passage d'admission (45) étant incliné d'un certain angle par rapport à un premier plan qui contient l'axe dudit alésage de cylindre (33), ledit plan étant, en utilisation, en ligne avec l'axe du vilebrequin, de sorte que le flux qui traverse ledit siège de soupape (44) forme un angle avec ledit premier plan, caractérisé en ce que ledit passage d'admission (45) est lui aussi incliné d'un certain angle par rapport à un deuxième plan perpendiculaire au premier plan et contenant lui aussi l'axe de l'alésage de cylindre et/ou en ce que le passage d'admission (45) est déporté par rapport au centre du siège de soupape (44), de manière qu'un côté du siège de soupape (44) soit alimenté par une plus grande aire de passage d'écoulement que l'autre côté.

2. Culasse de cylindre selon la revendication 1, dans laquelle le passage d'admission (45) est déporté par rapport au centre du siège de soupape (44) de manière qu'un côté (45a) du siège de soupape (44) soit alimenté par une plus grande aire de passage d'écoulement que l'autre côté (45b), et comprenant en outre une soupape d'admission (47) du type à champignon supportée mobile en mouvement alternatif par la culasse de cylindre (39) et coopérant avec le siège de soupape (44) pour commander l'écoulement à travers ce siège.

3. Culasse de cylindre selon la revendication 2, dans laquelle la vanne de commande (67) dirige le flux à travers un côté du siège de soupape adjacent au premier plan et éloigné du côté du siège de soupape qui est espacé du plan.

4. Culasse de cylindre selon une quelconque des revendications précédentes, dans laquelle le siège de soupape (44) a son centre disposé sensiblement sur le deuxième plan perpendiculaire.

5. Culasse de cylindre selon une quelconque des revendications précédentes, comprenant en outre un injecteur de carburant (66) servant à pulvériser le carburant dans le passage d'admission (45).

6. Culasse de cylindre selon la revendication 5 dans laquelle l'injecteur de carburant (66) est déporté vers un côté du passage d'admission.

7. Culasse de cylindre selon la revendication 6, dans laquelle l'injecteur de carburant (66) est déporté vers le côté le plus rapproché de l'axe de l'alésage de cylindre.

8. Culasse de cylindre selon une quelconque des revendications précédentes, dans laquelle le centre du siège de soupape (44) est déporté par rapport au deuxième plan perpendiculaire au premier plan et qui contient aussi l'axe de l'alésage de cylindre.

9. Culasse de cylindre selon une quelconque des revendications précédentes, comprenant en outre une bougie d'allumage (64) montée dans la culasse de cylindre (39) et ayant son espace entre électrodes (65) disposé dans la chambre de combustion.

10. Culasse de cylindre selon la revendication 9, dans laquelle l'axe d'écoulement (62) du passage d'admission (45) est dirigé vers l'espace entre électrodes (65).

11. Culasse de cylindre selon la revendication 9, dans laquelle l'axe d'écoulement (62) du passage d'admission (45) est dirigé dans une direction qui s'éloigne de l'espace entre électrodes (65).

12. Culasse de cylindre selon la revendication 9, dans laquelle la bougie d'allumage (64) se trouve sur le côté du deuxième plan perpendiculaire au premier plan où se trouve la plus grande section d'écoulement du passage d'admission (45) relativement au siège de soupape.

13. Culasse de cylindre selon la revendication 9, dans laquelle la bougie d'allumage (64) est disposée sur le côté du deuxième plan perpendiculaire au premier plan vers lequel l'axe géométrique du passage d'admission (45) est dirigé.

14. Culasse de cylindre selon une quelconque des revendications précédentes, dans laquelle la chambre de combustion est munie d'une région de génération de turbulence (201) disposée sur un côté dudit deuxième plan.
